# EUROPEAN PATENT APPLICATION

(11) **EP 3 493 530 A1**
(43) Date of publication of application: **05.06.2019**
(21) Application number: 17205179.9
(22) Date of filing: 04.12.2017
(51) Int. Cl.: H04N 5/44

(54) **SIGNAL RECEIVER ARRANGEMENT FOR RECEIVING WIRELESS SIGNALS**

(71) Applicant: Vestel Elektronik Sanayi ve Ticaret A.S., 45030 Manisa (TR)
(72) Inventor: TUNAY,, Erkan, 45030 Manisa (TR); TOPÇUOGLU,, Serdar, 45030 Manisa (TR)
(74) Representative: Flint, Adam

(57) **Abstract**

A signal receiver (121) for receiving wireless signals (133) is movable back and forth within a recess (122) so as to change the angular range of wireless signals (133) which can be received by the signal receiver (122). The signal receiver (122) can receive wireless signals (133) over a wide angular range (134a) when the signal receiver (121) is located towards the front of the recess (122) and can receive wireless signals (133) only over a narrow angular range (134b) when the signal receiver (121) is located towards the rear of the recess (122).

## Description

### Technical Field

The present disclosure relates to a signal receiver arrangement for receiving wireless control signals.

### Background

A remote control device is a typically handheld device for controlling one or more external devices such as televisions, set-top boxes, games consoles, etc. Known remote control devices comprise a transmitter for transmitting control signals to an external device via, for example, a modulated infrared light output or some other wireless signal. The external device receives the control command via a receiver and executes the corresponding control functionality. For example, a user may use a remote control device to turn a television on or off, to change channel, or to increase or decrease the audio volume.

### Summary

According to a first aspect disclosed herein, there is provided a signal receiver arrangement for receiving wireless signals, the arrangement comprising: a signal receiver for receiving wireless signals; the arrangement defining a recess; the signal receiver being movable back and forth within the recess so as to change the angular range of wireless signals which can be received by the signal receiver whereby the signal receiver can receive wireless signals over a wide angular range when the signal receiver is located towards the front of the recess and can receive wireless signals only over a narrow angular range when the signal receiver is located towards the rear of the recess.

In an example, the recess is defined by one or more walls which are opaque to the wireless signals that can be received by the signal receiver.

In an example, the recess is defined by a hollow cylinder and the signal receiver is movable back and forth within the hollow cylinder.

In an example, the signal receiver arrangement comprises a drive arrangement for controllably driving the movement of the signal receiver back and forth within the recess.

In an example, the drive arrangement is configured to move the signal receiver in response to a command received via the signal receiver.

In an example, the signal receiver arrangement comprises a reflector at the front of the recess for reflecting wireless signals towards the signal receiver when the signal receiver is located towards the front of the recess.

In an example, the inside of the recess comprises an absorbent coating for absorbing wireless signals.

In an example, the signal receiver comprises a light receiver for receiving light.

In an example, the signal receiver comprises an infrared light receiver for receiving infrared light.

### Brief Description of the Drawings

To assist understanding of the present disclosure and to show how embodiments may be put into effect, reference is made by way of example to the accompanying drawings in which:
Figure 1 shows schematically an example system according to embodiments of the invention;
Figure 2 shows schematically a first example setup in a room comprising two televisions;
Figure 3 shows schematically a second example setup in a room comprising two televisions;
Figures 4a and 4b show schematically example configurations of a receiver of an electronic device in more detail;
Figure 5 shows schematically a further example of a receiver; and
Figures 6a and 6b show schematically another example of a receiver.

### Detailed Description

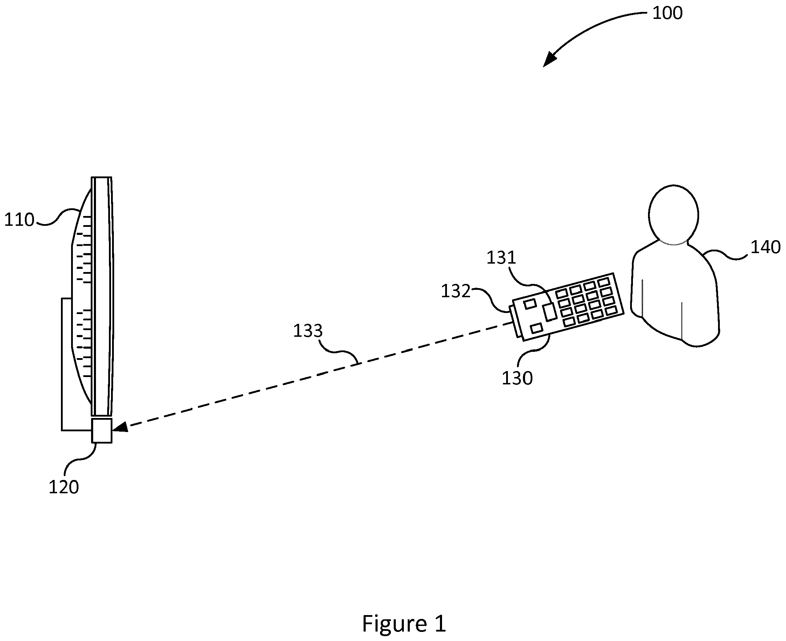

Figure 1 is a schematic diagram illustrating an example of a system 100 in which aspects disclosed herein may be employed. The system 100 comprises an electronic device 110 and a control device 130. The control device 130 is operated by a user 140 in order to control the electronic device 110, e.g. to turn the electronic device 110 on or off, or to adjust one or more settings of the electronic device 110.

The electronic device 110 is provided with a signal receiver arrangement 120 for receiving wireless signals. In this example, the signal receiver arrangement 120 is external from the electronic device 110 itself and operably coupled to the electronic device 110 via a wired connected. The connection between the signal receiver arrangement 120 and the electronic device 110 may be via a wireless connection such as a Bluetooth connection. The signal receiver arrangement 120 may alternatively be incorporated into the electronic device 110 itself.

The signal receiver arrangement 120 is configured and arranged to receive wireless control signals transmitted via, for example, infrared light. Techniques for doing so are well-known in the art. For example, infrared light may be modulated using amplitude-shift keying (ASK) or other modulation techniques to transmit command data. Once received by the signal receiver arrangement 120, the data can be demodulated to determine the transmitted control command to be enacted by the electronic device 110. Techniques for doing so a well-known in the art. Other types of wireless communication are well-known, such as visible light communications, ultrasonic communication, etc.

The signal receiver arrangement 120 has a detector 121 for the wireless signals, such as a photodiode in the case that the wireless signals are infrared or visible light, etc. The detector 121 is in communication with other processing components, such as for example an automatic gain controller (AGC) and a demodulator, which may be provided in the signal receiver arrangement. The demodulated signals may be passed to a microcontroller of the electronic device 110 for enacting the associated control functionality.

The control device 130 is, in this example, a hand-held control device to be held by the user 140 when using it to operate the electronic device 110. Alternatively, the control device 130 may be a standalone (non-hand-held) control device. The control device 130 comprises a plurality of buttons 131, each associated with a particular control functionality. When the user 140 presses one or more of the buttons 131, the control device 130 outputs a control command associated with that button 131 or combination of buttons 131 via, in this example, an infrared light signal 133. The infrared light signal 133 itself is generated by an infrared light source 132 such as an infrared LED of the control device 130 as shown in Figure 1.

As mentioned above, and known in the art, the signal receiver arrangement 120 may detect wireless signals, such as for example infrared light signals, from a range of incident angles. For example, the signal receiver arrangement 120 may be arranged to detect infrared light from in front of the electronic device 110 (as shown in Figure 1) but not from behind the electronic device 110. On the one hand, this means that the control device 130 may potentially control the electronic device 110 when located anywhere within a particular angular range of the signal receiver arrangement 120. On the other hand, this means that infrared light emitted by any control device 130 within that particular angular range may be picked up by the signal receiver arrangement 120. This can cause problems with interference when two or more signal receiver arrangement 120 are present.

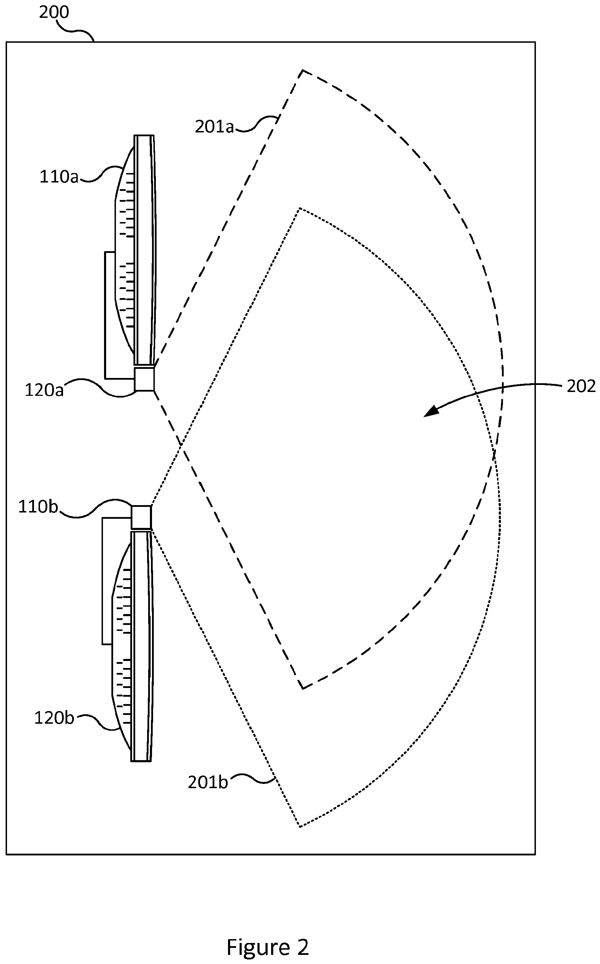

Figure 2 shows an example setup in which a first television 110a and a second television 110b are located within a room 200. Each television is an example of an electronic device 110 as described above in relation to Figure 1. Hence, the first television 110a has an associated first signal receiver arrangement 120a and the second television 110b has an associated second signal receiver arrangement 120b.

As mentioned above, each signal receiver arrangement 120a,b has a particular angular range over which it is arranged to detect infrared light. As shown in Figure 2, the first signal receiver arrangement 120a is arranged to detect infrared light within a first range 201a and the second signal receiver arrangement 120b is arranged to detect infrared light within a second range 201b. The first range 201a and the second range 201b are spatial volumes within the room 200 and overlap within a part 202 of the room 200. Hence, infrared light emitted by a control device, such as control device 130 shown in Figure 1, located within the overlapping part 202 of the room 200 may be detected by both the first signal receiver arrangement 120a and the second signal receiver arrangement 110b. The user 140 typically does not want to control more than one device 110 at a time. Therefore, this may be a problem if both receivers 120a,b receive the light, identify (e.g. demodulate) the control command, and act on it accordingly. For example, a user 140 located within the overlapping part 202 of the room 200 who wishes to turn off the first television 110a using the control device 130 may end up turning both televisions 110a,b off.

Alternatively or additionally, there may be other electronic devices of other types, such as DVD players, Blu Ray players, set-top boxes, hi fi components (e.g. CD player, amplifier, MP3 player, etc.), etc. in the same location which are all controlled by wireless signals and which may therefore be inadvertently controlled by wireless signals intended for a different electronic device.

Embodiments described herein provide an adjustable detection range for the signal receiver arrangement 120. This allows the receiving ranges of multiple signal receiver arrangements 120 to be varied such that they do not substantially overlap spatially, thus avoiding interference between remote controller signals and inadvertent or unintentional control of electronic devices.

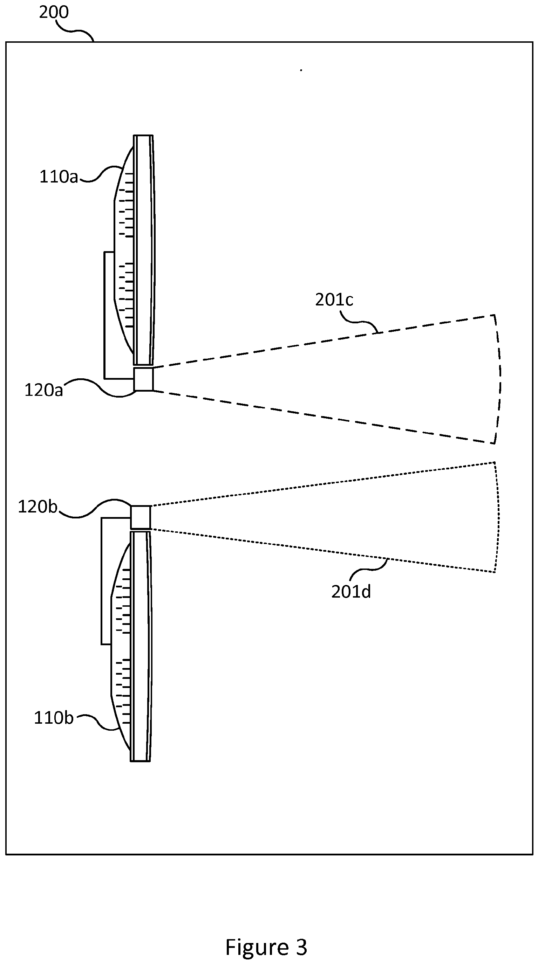

Figure 3 shows a corresponding setup to that of Figure 2, but wherein the first range 201a has been narrowed to a third range 201c and the second range 201b has been narrowed to a fourth range 201d. In this arrangement, there is no region within the room 200 in which the third range 201c and fourth range 201d overlap. This means that an infrared or other wireless control signal emitted by a control device 130 will only be detected by a single signal receiver arrangement 120, no matter where the control device 130 is located within the room 200.

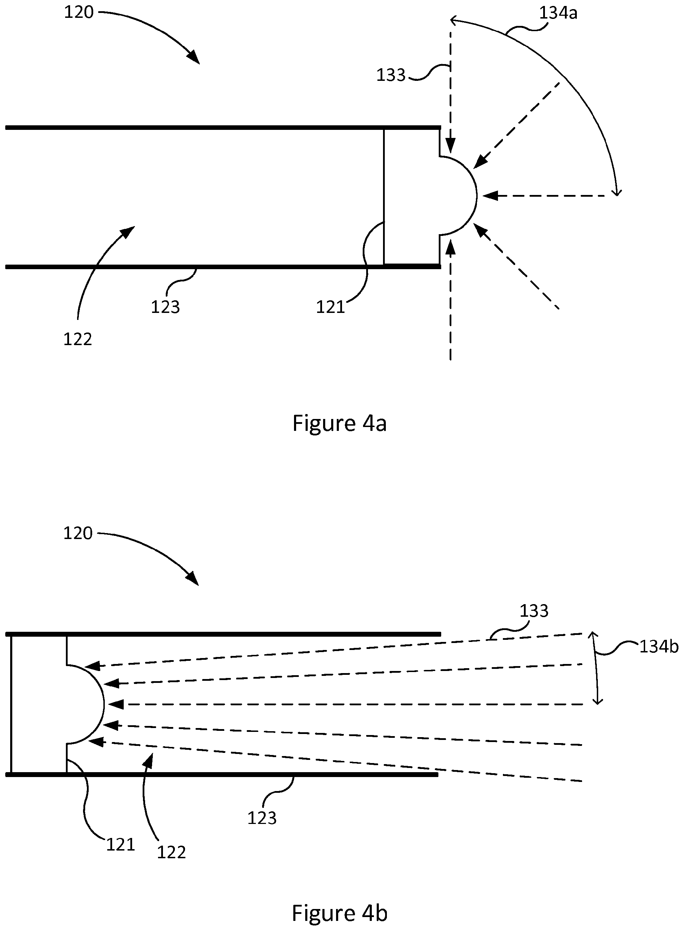

Figures 4a and 4b illustrate schematically an example signal receiver arrangement 120 in more detail. In Figure 4a, the signal receiver arrangement 120 is in a configuration having a wide reception area 134a. In Figure 4b, the signal receiver arrangement 120 is in a configuration having a narrow reception area 134b.

The signal receiver arrangement 120 comprises a signal receiver or detector 121 and a recess 122. The recess 122 is defined by a wall 123, the wall being opaque to infrared light (or other signal medium, depending on what is used), such that the angular range of signals reaching a given location within the recess 122 decreases with increasing depth into the recess 122. In this example, the recess 122 is provided by a tube (e.g. a hollow cylinder) but alternatively may be a recess formed in a block or slab of material that is opaque to the wireless signals of interest.

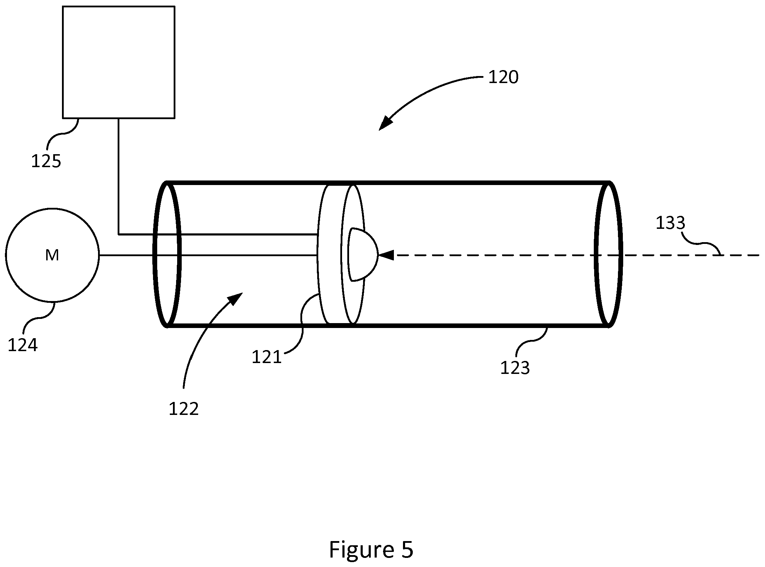

The detector 121 may be, for example, a photodiode in the case that the wireless signals are infrared or visible light, etc.. The detector 121 is located inside the recess 122 and is able to be moved back and forth along the length of the recess 122. For example, the user 140 may manually move the detector 121 within the recess 122 to tune the angular detection range as desired. Alternatively or additionally, a drive arrangement such as a motor or other actuator may be provided for moving the detector 121 within the recess 122 (described in more detail in relation to Figure 5). The walls 123 of the recess 122 are opaque to the wireless signals, such as infrared light, but has an open end in through which the wireless signals can enter the recess 122. Hence, the farther the detector 121 is located from the open end (the deeper the detector 121 is inside the tube 122), the narrower the range of incident angles of light that will reach the detector 121.

The inside surface of the recess 122 may be coated with a coating for absorbing infrared light (or other wireless signal that is detectable by the detector 121). This has the advantage of reducing or eliminating wireless signals detected by the detector 121 which did not arrive at the detector 121 directly, but were reflected off the inside surface of the recess 122.

The detector 121 is configured to generate an output based on detected signals and to provide the output to a processor of the electronic device 110 (e.g. a microcontroller, as mentioned above). This may comprise intermediate steps such as providing the output to an AGC, demodulator, etc. as mentioned above.

In Figure 4a, the detector 121 is located close to the open end of the recess 122 (and protrudes out of the recess 122 in this example). In this position, the angular range 134a (viewed from above) of incident light 133 which will fall upon the detector 121 is substantially 180°.

In Figure 4b, the detector 121 is located far from the open end of the recess 122 (at the back of the recess 122 in this example). In this position, the range 134b of incident light 133 which will fall upon the detector 121 is substantially less than 180°. Hence, the range of detectable incident light can be tuned by positioning the detector 121 at an appropriate position within the recess 122. This can be used to achieve the results described above in relation to Figures 2 and 3 wherein the ranges are modified so as not to overlap within the room 200. It is understood that Figures 2, 3, 4a and 4b show only a flat, planar views, and that the same principles apply in three dimensions.

Figure 5 illustrates schematically another example of a signal receiver arrangement 120. In this example, as before, the detector 121 is located within a tubular recess 122. However, in this example the detector 121 is connected to a drive arrangement 124 for moving the detector 121 within the recess 122. For example, the drive arrangement 124 may comprise one or more motors or actuators for moving the detector 121 along the length of the recess 122.

The detector 121 is operably coupled to a processor 125. The processor 125 is configured to receive a signal from the detector 121 and to determine the control command therefrom. For example, the processor 125 may be a control processor of the electronic device 110 (mentioned above). Again, this may comprise intermediate steps such as applying gain control, demodulation, decoding, etc. as known in the art.

The drive arrangement 124 may be configured to move the detector 121 to a particular location relative to the recess 122 in response to an input (e.g. the drive arrangement 124 may move the detector 121 to a location at or near the front or open end of the recess 122 in response to an input specifying a wide angular range is desired). This input may be provided by the processor 125 or by the user 140 directly. For example, a control command from the control device 130 may be received by the detector 121 to cause the drive arrangement 124 to move the detector 121 accordingly. In such cases, the user 140 is able to tune the angular range of the signal receiver arrangement 120 by ensuring that the control device 130 is within range of only that signal receiver arrangement 120 (e.g. by placing the control device 130 next to the front of the recess 122) and pressing a corresponding one or more buttons 131 of the control device 130 to transmit a control signal 133 indicating that the angular range should be increased or decreased. This signal 133 is received by the detector 121 and causes the drive arrangement 124 to move the detector 121 in the corresponding direction within the recess 122.

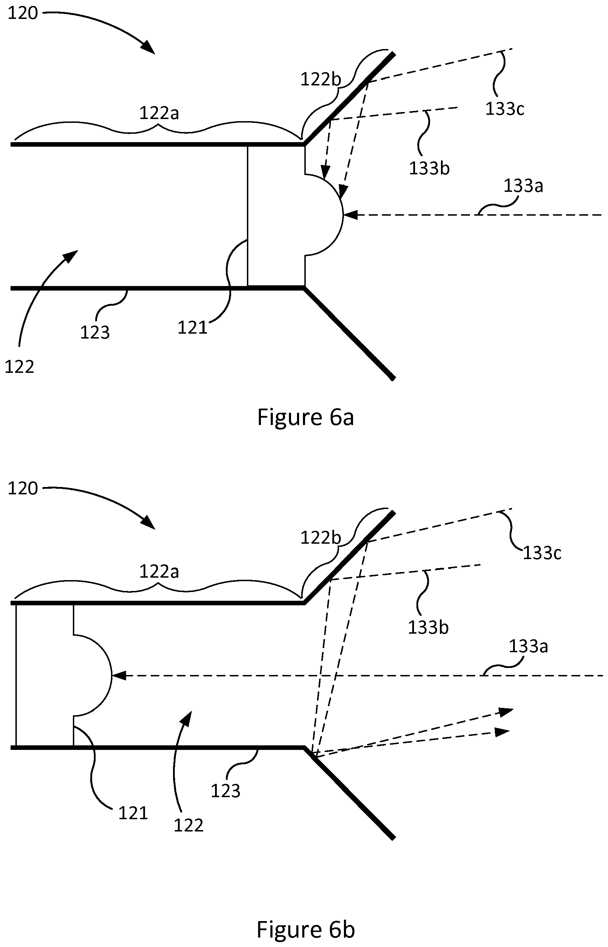

Figures 6a and 6b illustrate schematically another example signal receiver arrangement 120 in two configurations. Similarly to Figures 4a and 4b, Figure 6a shows the detector 121 located towards the front of the recess 122 and Figure 6b shows the detector 121 located towards the back of the recess 122.

In this example, the recess 122 comprises a tubular portion 122a and a reflector portion 122b at the open front end of the recess 122. The tubular portion 122a is substantially the same as the tube described above in relation to Figures 4a, 4b and 5. The reflector portion 122b comprises one or more reflectors which flare outwardly from the open end of the recess 122 for reflecting control signals. For example, when the control signals are transmitted via light, such as IR or visible light, the reflectors may comprise mirrors for reflecting the light. It is understood that Figures 6a and 6b show only a flat, two-dimensional depiction of the signal receiver arrangement 120 and that the reflector portion 122b may extend around the outside edge at the end of the tubular portion 122a of the recess 122.

Control signals incident along the axis of the tubular portion 122a, e.g. control signal 133a shown in the figures, are received by the detector 121 in both the extended position shown in Figure 6a and the retracted position shown in Figure 6b.

The reflectors of the reflector portion 122b assist in controlling the angular range over which control signals can be received wirelessly by the detector 121 when the detector 121 is in the forward position. Two example control signals 133b,c are shown. These control signals 133b,c are reflected by the reflecting portion 122b and then received by the detector 121 when in the forward position shown in Figure 6a. These control signals 133b,c would otherwise have not been received by the detector 121.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A signal receiver arrangement for receiving wireless signals, the arrangement comprising:
a signal receiver for receiving wireless signals;
the arrangement defining a recess;
the signal receiver being movable back and forth within the recess so as to change the angular range of wireless signals which can be received by the signal receiver whereby the signal receiver can receive wireless signals over a wide angular range when the signal receiver is located towards the front of the recess and can receive wireless signals only over a narrow angular range when the signal receiver is located towards the rear of the recess.

2. A signal receiver according to claim 1, wherein the recess is defined by one or more walls which are opaque to the wireless signals that can be received by the signal receiver.

3. A signal receiver according to claim 1 or claim 2, wherein the recess is defined by a hollow cylinder and the signal receiver is movable back and forth within the hollow cylinder.

4. A signal receiver according to any of claims 1 to 3, comprising a drive arrangement for controllably driving the movement of the signal receiver back and forth within the recess.

5. A signal receiver according to claim 4, wherein the drive arrangement is configured to move the signal receiver in response to a command received via the signal receiver.

6. A signal receiver according to any of claims 1 to 5, wherein the signal receiver arrangement comprises a reflector at the front of the recess for reflecting wireless signals towards the signal receiver when the signal receiver is located towards the front of the recess.

7. A signal receiver according to any of claims 1 to 6, wherein the inside of the recess comprises an absorbent coating for absorbing wireless signals.

8. A signal receiver according to any of claims 1 to 7, wherein the signal receiver comprises a light receiver for receiving light.

9. A signal receiver according to claim 8, wherein the signal receiver comprises an infrared light receiver for receiving infrared light.
